# EUROPEAN PATENT SPECIFICATION

(11) **EP 1 411 036 B1**
(45) Date of publication and mention of the grant of the patent: **20.02.2019**
(21) Application number: 02380221.8
(22) Date of filing: 29.10.2002
(51) Int. Cl.: C05D 9/02, C05C 1/02, C05D 5/00

(54) **Method of obtaining nitrogenated granular fertilizers with a high microelement content and fertilizers obtained thereby**
Verfahren zur Herstellung von Stickstoffdüngern mit hohem Spurenelementgehalt und daraus hergestellte Düngemittel
Procédé d'obtention d'engrais azotés à teneur élevée en micro-éléments et engrais obtenus par ce procédé

(43) Date of publication of application: 21.04.2004
(73) Proprietor: FERTINAGRO BIOTECH, S.L., 44195 Teruel (ES)
(72) Inventor: Atares Real, Sergio, 44195 Teruel (ES)
(74) Representative: Mato Adrover, Ángel Luis

(56) References cited:
- WO-A-01/38258
- ES-A1- 2 036 949
- GB-A- 1 060 182
- GB-A- 2 140 454
- US-A- 3 212 944
- US-A- 3 282 674
- US-A- 3 898 070
- US-A- 4 316 736
- US-A- 5 720 794
- US-A- 5 766 301

## Description

### OBJECT OF THE INVENTION

The object of the present invention is a procedure to obtain nitrogenated granular fertiliser with a high microelement content and the fertiliser obtained by this procedure.

The use of fertiliser is essential in modem agriculture and it is increasingly important to develop fertilisers in which the best possible exploitation of nitrogen is achieved.

The present invention is distinguished by the fact that a granular fertiliser is produced, which not only serves as a Nitrogen input to soils, but also supplies a large amount of oligoelements and magnesium.

Another object of this invention is to produce a fertiliser, that optimally exploits its Nitrogen contents, being optimally environmental friendly, since it avoids overdose of the soils, the pollution of aquifers and the fire and explosion risks associated with the transport and application of ammonium nitrate.

Therefore, the present invention can be classified within the context of the development of new fertilisers, which permit maximum exploitation of Nitrogen, and have considerable oligoelement and magnesium contents.

### BACKGROUND OF THE INVENTION

One of the current problems of agricultural lands is a deficiency of Nitrogen in soils, for which different nitrogenated compounds are employed such as urea, that, in spite of having a greater proportion of available Nitrogen, and being the most inexpensive form of Nitrogen, presents a poor yield.

Other nitrogenated fertilisers are Ammonium Nitrate with a Nitrogen concentration of 33.5%, and Calcic Ammonium Nitrate, with a Nitrogen contents of 27%. In both cases the fertilisation consists exclusively of a nitrogen source.

However, soils, as well requiring Nitrogen, also require inputs of oligoelements and magnesium, since oligoelements favour plant development while magnesium favours the release of potassium which, in spite of being present in the soil, cannot be assimilated by the plants without the presence of magnesium.

On the other hand, it is desirable to reduce the Nitrogen input to crops in order to reduce the overdose, the contamination of aquifers and to prevent the risk of fire and explosion associated with the transport and use of ammonium nitrate.

Therefore, the objective of the present invention is to obtain a nitrogenated granular fertiliser which does not present the aforementioned drawbacks which must, therefore, have high oligoelement and magnesium contents and permit optimum exploitation of its nitrogen contents.

The US3212944 relates to ammonium nitrate materials especially suitable for use in the field of explosives and to methods for preparing such materials, wherein the method comprises forming a molten mixture containing at least about 98% by weight of ammonium nitrate, between about 0.02% and about 1 % by weight of a hydratable inorganic salt selected from the group consisting of magnesium nitrate, aluminum nitrate, iron nitrate, calcium nitrate, zinc nitrate, magnesium sulfate, magnesium oxide and magnesium carbonate, not more than about 1% by weight of water, the total water content of said mixture being below that capable of being held as Water of hydration by said hydratable salt at temperatures below about 85C, prilling said molten mixture and recovering a prilled product at least about by weight of which is prills of a size less than about 20 mesh, the prill size distribution of said prilled product being such that said product has an uncompressed bulk density of at least about 60 pounds per cubic foot.

The US3898070 describes new chelating agents which are capable of complex-formation with metal ions, especially with iron (III) ions, and which are stable in a wide pH-range. They are thus suitable for the correction of metal-deficiency phenomena occurring both in plants growing in acid soils and in plants growing in alkaline soils. The new chelating agents are also suitable for use in other fields for which chelating agents have already been employed, eg for analytic chemistry. This new chelating agents are derivatives of ethylenediaminetetraacetic acid.

US5766301 and ES2036949 describe microelement deficiency correctors for farmland derived from the by-product of the manufacture of titanium bioxide via sulfate.

### DESCRIPTION OF THE INVENTION

The fertiliser to which the invention refers, is based on the use of a Nitrogen-based raw material, another raw material with a high oligoelement contents and, finally, a material with a high calcinated Magnesium contents.

The Nitrogen-based raw material can be Ammonium Nitrate with 33.5% of dissolved compound or liquor used in the manufacturing process of the said product with a concentration of 98-99%.

On the other hand, the raw material with a high oligoelements contents can be used chelated with EDTA or in the sulphate form, preferentially as metallic sulphate, obtained as a by-product in the process used to obtain titanium bioxide which has the following composition:

| Fe II | 19% | H₂O₄ | 18% |
|---|---|---|---|
| Mn | 0.9% | Ti | 1.5% |
| Zn | 3.160 mg/kg Fe II | Se | 0.13 mg/kg Fe II |
| Ni | 100 mg/kg Fe II | Sb | 0.10 mg/kg Fe II |
| Pb | 210 mg/kg Fe II | As | 14.2 mg/kg Fe II |
| Hg | 0.10 mg/kg Fe II | Cd | 1.05 mg/kg Fe II |
| Cr | 1.055 mg/kg Fe II | Cu | 1.15 mg/kg Fe II |

The third raw material, with a high magnesium contents, can be dolomites, magnesium sulphate, magnesium oxide.

Nevertheless, and in addition to the previously used raw materials, other phosphorus and potassium-based nutrients are also added, such as, for example monoammonium phosphate, diammonium phosphate, potassium chloride or potassium sulphate.

The manufacturing procedure, basically consists in reducing the high pH of the metallic sulphate by using a raw material with a high magnesium contents such as magnesium oxide, achieving a final product in which both raw materials are well blended which is perfectly dosifiable and transportable.

After, the Nitrogen-based raw material is added to a conventional granulator equipment, in which the proportion of neutralised mixture of metallic sulphate and magnesite range from 17 to 40%, whereas the proportion of Nitrogen-based raw material will range from 83 to 60%, respectively, depending on the degree of fertilisation desired.

The granules obtained are classified by removing those with diameters less than 2 mm and those with diameters over 5 millimetres, which are ground and added again to the granulator.

### DESCRIPTION OF THE DIAGRAMS

As a complement to the following description and to make its characteristics easier to comprehend, the descriptive report is accompanied by a set of plans in which figures, as an example and not limiting the scope of the application, represent the most significant details of the invention.

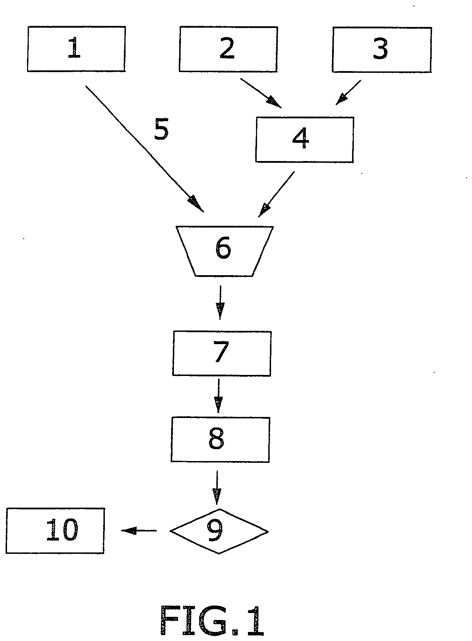

Figure 1. Shows a schematic representation of the steps taken to obtain the nitrogenated fertiliser that is the object of the invention.

### PREFERABLE PROCEDURE OF THE INVENTION

The fertiliser to which the invention refers, as mentioned previously, is comprised of three raw materials.

Nitrogen-based raw materials, preferentially Ammonium Nitrate (1) at 33.5% used in dissolved form or as a liquor which is used in the manufacturing process of the product and present in the proportion of 98-99%.

Raw material with a high oligoelements' content, can be used chelated with EDTA or in the sulphate form, such as metallic sulphate (2) obtained as a by-product in the procedure used to obtain titanium bioxide, with the previously specified composition.

Raw material with a high magnesium contents, preferentially calcinated magnesium oxide (3) with a concentration of 72% MgO.

Additionally, and optionally, it is possible to introduce other phosphorus and potassium-based nutrients such as monoammonium phosphate, diammonium phosphate, potassium chloride, potassium sulphate etc.

The procedure used to obtain the granular nitrogenated fertiliser with a high microelements' content corresponds to the following steps:
Neutralisation (4) of the metallic sulphate (2), consisting in Fe II 19%; H₂SO₄ 18%; Mn 0.9%; Ti 1.5%; Zn 3,160 mg/kg Fe II; Se 0.13 mg/kg Fe II; Ni 100 mg/kg Fe II; Sb 0.10 mg/kg Fe II; Pb 210 mg/kg Fe II; As 14.2 mg/kg Fe II; Hg 0.10 mg/kg Fe II; Cd 1.05 mg/kg Fe II; Cr 1.055 mg/kg Fe II and Cu 1.15 mg/kg Fe II to achieve a pH between 8 and 5 by using calcinated magnesium oxide (3) in a proportion of between 5 and 15%.

By adding (5) the nitrogenated base to a conventional granulator system (6). To do this, the neutralised mixture of metallic sulphate and magnesite is added in a proportion in weight of between 17 and 40%, while the ammonium nitrate is added in a proportion of between 83 and 60%, respectively, depending on the degree of fertilisation required.

To obtain the granules (7).

To dry the granules in a rotational drier (8).

Classification (9) of the granules accepting those between two and five millimetres, larger and smaller ones are rejected.

Grinding (10) of the rejected granules to be later introduced into the granulator.

In relation to the neutralisation process (4) of the metallic sulphate by the magnesite, it is noteworthy that this mixture is obtained in conventional dosing and mixing equipment, achieving a powder mixture that is perfectly transportable and dosifiable.

Finally, it is also noteworthy that owing to the proportion of commercial to recycled granules, in a ratio of 1 to 3, absorption of the liquor in the granulator is facilitated.

It is not necessary to expand on this description since any expert in this area will understand the scope of the invention and the benefits derived from it.

## Claims

1. Procedure to obtain nitrogenated granular fertiliser with a high content of oligoelements **characterized in that** it is obtained by the following steps:
Neutralisation of a metallic sulphate consisting in Fe II 19%; H₂SO₄ 18%; Mn 0.9%; Ti 1.5%; Zn 3,160 mg/kg Fell; Se 0.13 mg/kg Fe II; Ni 100 mg/kg Fe II; Sb 0.10 mg/kg Fe II; Pb 210 mg/kg Fe II; As 14.2 mg/kg Fe II; Hg 0.10 mg/kg Fe II; Cd 1.05 mg/kg Fe II; Cr 1.055 mg/kg Fe II and Cu 1.15 mg/kg Fe II to achieve a pH between 8 and 5 by using calcinated magnesium oxide in a proportion of between 5 and 15%.
Adding a nitrogen based-material to a conventional granulator system, the neutralised mixture of metallic sulphate and magnesite is added in a proportion in weight between 17 and 40%, whereas ammonium nitrate is used in a proportion of between 83 and 60% respectively, depending on the degree of fertilisation desired.
Obtaining the granules.
Drying the granules in a rotational drier.
Classification of the granules, accepting those between two and five millimetres, those with large or smaller dimensions are rejected.
Grinding the rejected granules and then reintroducing them into the granulator.

2. Procedure to obtain nitrogenated granular fertiliser with a high oligoelement content according to Claim 1, **characterized in that** the neutralisation of the metallic sulphate is achieved at a range of pH 6-7.5.

3. Nitrogenated granular fertiliser with a high oligoelement content wherein it comprises a Nitrogen-based raw material, a raw material with microelements including metallic sulphate consisting in Fe II 19%; H₂SO₄ 18%; Mn 0.9%; Ti 1.5%; Zn 3,160 mg/kg Fell; Se 0.13 mg/kg Fell; Ni 100 mg/kg Fell; Sb 0.10 mg/kg Fell; Pb 210 mg/kg Fell; As 14.2 mg/kg Fell; Hg 0.10 mg/kg Fell; Cd 1.05 mg/kg Fell; Cr 1.055 mg/kg Fell and Cu 1.15 mg/kg Fell, and a raw material with Magnesium contents wherein the nitrogen-based raw material is 33.5% dissolved ammonium nitrate or as a liquor at a concentration of 98-99%, and the raw material with a magnesium contents is 72% MgO and which is obtained by means of the procedure according to claim 1.

## Patentansprüche

1. Verfahren zur Herstellung von Stickstoffdünger mit hohem Spurenelementgehalt, **dadurch gekennzeichnet, dass** es durch die folgenden Schritte hergestellt wird:
Neutralisieren eines metallischen Sulfats, bestehend aus Fe II: 19 %; H₂SO₄: 18 %; Mn: 0,9 %; Ti: 1,5 %; Zn: 3,160 mg/kg Fe II; Se: 0,13 mg/kg Fe II; Ni: 100 mg/kg Fe II; Sb: 0,10 mg/kg Fe II; Pb: 210 mg/kg Fe II; As: 14,2 mg/kg Fe II; Hg: 0,10 mg/kg Fe II; Cd: 1,05 mg/kg Fe II; Cr: 1,055 mg/kg Fe II und Cu: 1,15 mg/kg Fe II, um einen pH-Wert zwischen 8 und 5 durch Verwendung von kalziniertem Magnesiumoxid in einem Verhältnis von 5 bis 15 % zu erreichen.
Hinzufügen eines stickstoffbasierten Materials zu einem herkömmlichen Granuliersystem, wobei das neutralisierte Gemisch von metallischem Sulfat und Magnesit in einem Gewichtsanteil von 17 bis 40 % hinzugefügt wird, wobei Ammoniumnitrat in einem Anteil von 83 bzw. 60 %, abhängig von dem gewünschten Grad der Düngung, verwendet wird.
Herstellen der Granulate.
Trocknen der Granulate in einem Rotationstrockner.
Klassifizieren der Granulate, wobei die zwischen zwei und fünf Millimetern akzeptiert werden und die mit größeren oder kleineren Ausmaßen entfernt werden.
Mahlen der entfernten Granulate und dann Wiedereinführen dieser in den Granulator.

2. Verfahren zur Herstellung von Stickstoffdünger mit hohem Spurenelementgehalt nach Anspruch 1, **dadurch gekennzeichnet, dass** die Neutralisation des metallischen Sulfats bei einem pH-Bereich von 6 bis 7,5 erreicht wird.

3. Stickstoffdünger mit einem hohen Spurenelementgehalt, wobei er ein stickstoffbasiertes Rohmaterial, ein Rohmaterial mit Spurenelementen, einschließlich metallisches Sulfat, das aus Fe II: 19 %; H₂SO₄: 18 %; Mn: 0,9 %; Ti: 1,5 %; Zn: 3,160 mg/kg Fe II; Se: 0,13 mg/kg Fe II; Ni: 100 mg/kg Fe II; Sb: 0,10 mg/kg Fe II; Pb: 210 mg/kg Fe II; As: 14,2 mg/kg Fe II; Hg: 0,10 mg/kg Fe II; Cd: 1,05 mg/kg Fe II; Cr: 1,055 mg/kg Fe II und Cu: 1,15 mg/kg Fe II besteht, und ein Rohmaterial mit Magnesiumgehalt umfasst, wobei das stickstoffbasierte Rohmaterial 33,5 % gelöstes Ammoniumnitrat oder eine Flüssigkeit bei einer Konzentration von 98 bis 99 % ist, und das Rohmaterial mit einem Magnesiumgehalt 72 % MgO ist und das mittels des Verfahrens nach Anspruch 1 hergestellt wird.

## Revendications

1. Procédure pour obtenir de l'engrais granulaire azoté ayant une teneur élevée en oligoéléments **caractérisée en ce qu'**il est obtenu par les étapes suivantes :
Neutralisation d'un sulfate métallique consistant en Fe II 19 % ; H₂SO₄ 18 % ; Mn 0,9 % ; Ti 1,5 % ; Zn 3,160 mg/kg Fe II ; Se 0,13 mg/kg Fe II ; Ni 100 mg/kg Fe II ; Sb 0,10 mg/kg Fe II ; Pb 210 mg/kg Fe II ; As 14,2 mg/kg Fe II ; Hg 0,10 mg/kg Fe II ; Cd 1,05 mg/kg Fe II ; Cr 1,055 mg/kg Fe II et Cu 1,15 mg/kg Fe II pour obtenir un pH entre 8 et 5 en utilisant de l'oxyde de magnésium calciné dans une proportion entre 5 et 15 %.
Ajouter une matière à base d'azote à un système broyeur conventionnel, le mélange neutralisé de sulfate métallique et de magnésite est ajouté dans une proportion en poids entre 17 et 40 %, alors que le nitrate d'ammonium est utilisé dans une proportion entre 83 et 60 % respectivement, en fonction du degré de fertilisation voulu.
Obtenir les granulés.
Faire sécher les granulés dans un séchoir rotatif.
Classification des granulés, accepter ceux entre deux et cinq millimètres, ceux ayant des dimensions plus grandes ou plus petites sont rejetés.
Concasser les granulés rejetés puis les réintroduire dans le broyeur.

2. Procédure pour obtenir de l'engrais granulaire azoté ayant une teneur élevée en oligoéléments selon la revendication 1, **caractérisée en ce que** la neutralisation du sulfate métallique est obtenue à une plage de pH de 6-7,5.

3. Engrais granulaire azoté ayant une teneur élevée en oligoéléments dans lequel il comprend une matière première à base d'azote, une matière première avec des microéléments comportant du sulfate métallique consistant en Fe II 19 % ; H₂SO₄ 18%; Mn 0,9 % ; Ti 1,5 % ; Zn 3,160 mg/kg Fe II ; Se 0,13 mg/kg Fe II ; Ni 100 mg/kg Fe II ; Sb 0,10 mg/kg Fe II ; Pb 210 mg/kg Fe II ; As 14,2 mg/kg Fe II ; Hg 0,10 mg/kg Fe II ; Cd 1,05 mg/kg Fe II ; Cr 1,055 mg/kg Fe II et Cu 1,15 mg/kg Fe II, et une matière première ayant des teneurs en magnésium dans lequel la matière brute à base d'azote est du nitrate d'ammonium dissout à 33,5% ou comme un liqueur à une concentration de 98-99 %, et la matière première ayant des teneurs en magnésium est de 72 % MgO et qui est obtenue au moyen de la procédure selon la revendication 1.
